# EUROPEAN PATENT APPLICATION

(11) **EP 4 524 101 A1**
(43) Date of publication of application: **19.03.2025**
(21) Application number: 23197547.5
(22) Date of filing: 14.09.2023
(51) Int. Cl.: C01B 3/34, C01B 3/48

(54) **PRODUCTION OF A HYDROGEN-CONTAINING SYNTHESIS GAS BY CONVERSION OF A HYDROCARBON FEEDSTOCK**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Shrivastava, Swatantra Kumar, 60439 Frankfurt am Main (DE); Kot, Krzysztof, 31-545 Krakow (PL); Ulber, Dieter, 60439 Frankfurt am Main (DE); Wentink, Paul, 3197 Rotterdam (NL)
(74) Representative: Air Liquide

(57) **Abstract**

Process comprising the production of a hydrogen-containing synthesis gas by the conversion of a hydrocarbon feedstock, said process comprising :
- providing a fuel stream of ammonia,
- transferring heat from an effluent gas to the provided fuel stream of ammonia by heat exchange between the provided fuel stream of ammonia and said effluent gas, thereby obtaining a heated fuel,
- combustion of said heated fuel in a fired equipment to provide a heat input to the process, thereby generating a flue gas,
- said effluent gas comprising said hydrogen-containing synthesis gas and/or a gas derived therefrom and/or said flue gas.

## Description

The field of the present invention is the conversion of a hydrocarbon feedstock into a hydrogen-containing synthesis gas.

A process of converting a hydrocarbon feedstock into a hydrogen-containing synthesis gas may be performed by direct firing for the steam methane reforming of said hydrocarbon feedstock. The operation of such processes usually comes along with the generation of waste heat. It has been found advantageous to generate steam from said waste heat, said steam being valuable for steam methane reforming. Some lower value process heat is rejected to the atmosphere via air cooling and discharge of the flue gas to the atmosphere.

One of the largest energy expense of such processes comes from the compression of process stream(s). Said compression is usually performed by series of compression stages. Advantageously, the energy consumption from said compression can be decreased by cooling at least one compression stage.

It is known to use ammonia as a fuel to provide heat to a process of converting a hydrocarbon feedstock into a synthesis gas. Ammonia is carbon free and the carbon dioxide emissions of the process can be reduced or even eliminated. A fuel stream of ammonia is usually provided in a liquid form and requires to be vaporized before being combusted to provide heat to the process. As liquid ammonia carries a valuable extraction of heat potential, it was found advantageous to vaporize said liquid ammonia by cooling a compression stage of the process.

It is an aim of the present invention to propose a process wherein more process heat, in particular more low value process heat can be recovered.

For this purpose, the invention proposes a process comprising the production of a hydrogen-containing synthesis gas by the conversion of a hydrocarbon feedstock, said process comprising :
- providing a fuel stream of ammonia,
- transferring heat from an effluent gas to the provided fuel stream of ammonia by heat exchange between the provided fuel stream of ammonia and said effluent gas, thereby obtaining a heated fuel,
- combustion of said heated fuel in a fired equipment to provide a heat input to the process, thereby generating a flue gas,
- said effluent gas comprising said hydrogen-containing synthesis gas and/or a gas derived therefrom and/or said flue gas.

The fuel stream of ammonia is also referred to as ammonia fuel.

In one embodiment, the effluent gas consists in said hydrogen-containing synthesis gas and/or a gas derived therefrom.

In one embodiment, the effluent gas consists in said flue gas.

In one embodiment, the process comprises performing said combustion by providing an oxidant stream, such as an atmospheric air stream, a stream of air enriched in oxygen or an oxygen stream. In particular, the process comprises transferring heat from the effluent gas to said oxidant stream. In particular, transferring heat from the effluent gas to the provided fuel stream of ammonia comprises transferring heat from the effluent gas to the provided fuel stream of ammonia by heat exchange between the provided fuel stream of ammonia and said effluent gas downstream of transferring heat from the effluent gas to said oxidant stream or in parallel to transferring heat from the effluent gas to said oxidant stream.

In one embodiment, said heat exchange between the provided fuel stream of ammonia and said effluent gas is performed in a heat exchanger, in particular a tube and shell heat exchanger, in which the provided fuel stream of ammonia and the effluent gas are flowing.

In one embodiment, the process comprises a cooling step comprising cooling at least part of the effluent gas by heat exchange with a cooling air supply and/or a cooling water supply. In particular, the process comprises diverting at least a part of the effluent gas to bypass said cooling step. Transferring heat from an effluent gas to the provided fuel stream of ammonia enables the bypass of said cooling step. In particular, transferring heat from the effluent gas to the provided fuel stream of ammonia comprises transferring heat from the diverted part of the effluent gas to the provided fuel stream of ammonia.

In one embodiment, transferring heat from the effluent gas to the provided fuel stream of ammonia comprises transferring heat from said effluent gas being at a temperature of less than 160°C, preferably at a temperature of less than 130°C. The inventors have found that this low value heat of the effluent gas can be valorized transferring heat to the fuel stream of ammonia.

In one embodiment, the fuel stream of ammonia is provided from a renewable and/or low carbon emission source.

In one embodiment, the combustion of the heated fuel comprises combusting the heated fuel in a gaseous form.

In one embodiment, the provided fuel stream of ammonia is in a liquid form, in particular in a pumped liquid form, for example from a tank. In one embodiment, said fuel stream of ammonia is provided as a trim fuel. The fuel stream of ammonia may be provided from the battery limit.

In one embodiment, transferring heat from an effluent gas to the provided fuel stream of ammonia comprises vaporizing said fuel stream of ammonia provided in a liquid form, in particular in a pumped liquid form, thereby obtaining a vaporized fuel. In particular, transferring heat from an effluent gas to the provided fuel stream of ammonia comprises super-heating said vaporized fuel, thereby obtaining a super-heated fuel. Said heated fuel comprises said vaporized fuel or said super-heated fuel.

In one embodiment, said fuel stream of ammonia is vaporized at a pressure comprised between 1,5 and 15 bar gauge.

In one embodiment, said fuel stream of ammonia is superheated at a temperature comprised between 35 and 100°C.

In one embodiment, transferring heat from an effluent gas to the provided fuel stream of ammonia comprises pre-heating said fuel stream of ammonia provided in a liquid form, in particular in a pumped liquid form, thereby obtaining a pre-heated liquid ammonia. In particular, the process comprises expanding said pre-heated liquid ammonia thereby obtaining said heated fuel, said expansion being performed to a pressure of combustion of the heated fuel in said fired equipment. In particular, said expansion is performed to a pressure comprises between 20 mbar gauge (mbarg) and 0,3 bar gauge. Pre-heating the fuel stream of ammonia in a liquid form enables to release more heat during the combustion in said fired equipment after said expansion.

In one embodiment, the combustion of the heated fuel is performed non-catalytically.

In one embodiment, said fuel stream of ammonia comprises predominantly ammonia. In one embodiment, said fuel stream of ammonia comprises at least 90% of the fuel stream of ammonia, preferably at least 95%. In particular, said fuel stream of ammonia is substantially pure ammonia.

In one embodiment, said conversion comprises performing an endothermic conversion of the hydrocarbon feedstock into said hydrogen-containing synthesis gas. In particular, said heat input comprises combusting said heated fuel to provide heat to said endothermic conversion, thereby generating said flue gas.

In one embodiment, said heat input comprises providing heat to a water boiler for producing steam.

In one embodiment, the conversion of the hydrocarbon feedstock comprises a reforming process of the hydrocarbon feedstock, in particular a reforming process of natural gas. Said reforming process includes for example steam methane reforming or auto-thermal reforming. Alternatively, the conversion of the hydrocarbon feedstock comprises a partial oxidation of the hydrocarbon feedstock.

In one embodiment, said fired equipment comprises a fired heater, for example belonging to a reforming section for performing said conversion of the hydrocarbon feedstock or belonging to a partial oxidation section for performing said conversion of the hydrocarbon feedstock. Said fired equipment may also comprise a purification section, a feedstock pre-heater, an auxiliary steam generator, a steam super-heater and/or a gas turbine. In particular, said reforming section is comprised in a fired reformer, for example an autothermal reformer. In particular, said fired reformer comprises one or more catalyst-filled tubes.

In one embodiment, the synthesis gas comprises hydrogen and carbon monoxide. In particular, the synthesis gas comprises hydrogen, carbon monoxide and carbon dioxide.

In one embodiment, the synthesis gas is subjected to a water-gas shift reaction, thereby producing a shift gas comprising carbon dioxide and hydrogen. In particular, said effluent gas comprises said shift gas.

In one embodiment, the process comprises cooling said shift gas, in particular cooling said shift gas by heat exchanges with a cooling water supply, thereby obtaining a cooled shift gas. In particular, the shift gas is cooled to a temperature of 35°C or less. Transferring heat from the shift gas to the provided fuel stream of ammonia allows to reduce said cooling of the shift gas using cooling water.

In one embodiment, the process comprises cooling said flue gas and discharging said flue gas to the atmosphere, in particular through a flue gas stack. Transferring heat from the flue gas to the provided fuel stream of ammonia allows to downscale said cooling of the flue gas.

In one embodiment, the process comprises recovering hydrogen from the synthesis gas and/or from a gas derived therefrom, thereby producing a hydrogen product and generating an off gas. In particular, the process comprises recovering hydrogen from said shift gas, in particular from said cooled shift gas.

In one embodiment, the generated off gas is subjected to a removal of at least part of the carbon dioxide it contains, thereby obtaining a carbon dioxide depleted off gas and producing a carbon dioxide product.

In one embodiment, the hydrogen product is produced with a purity of more than 99,9%.

In one embodiment, the synthesis gas comprises hydrogen and nitrogen and said synthesis gas is catalytically reacted in a synthesis loop to produce ammonia. In particular, said fuel stream of ammonia is derived from the produced ammonia.

In one embodiment, the synthesis gas comprises carbon oxides and hydrogen and said synthesis gas is catalytically reacted in a synthesis loop to produce methanol.

In one embodiment, at least one additional fuel is provided and combusted to provide a further heat input to the process, in particular to provide heat to said endothermic conversion. In particular, the at least one additional fuel comprises at least part of said off gas and/or at least part of a gas derived from said off gas, such as said carbon dioxide depleted off gas.

In one embodiment, the process comprises determining a lower heating value (LHV) of said off gas and/or of said gas derived from said off gas provided as additional fuel and regulating an amount of fuel stream of ammonia provided according to said determined lower heating value. In particular, regulating an amount of fuel stream of ammonia provided according to said determined lower heating value comprises increasing said amount of fuel stream of ammonia provided if said determined lower heating value is below a predetermined value. In particular, the process comprises increasing an amount of effluent gas diverted to bypass said cooling step, if said determined lower heating value is below a predetermined value. The amount of cooling duty can thereby be adjusted to a heating value of said generated off gas and/or of said carbon dioxide depleted off gas as a fuel.

In one embodiment, said heat input to the process comprises a heat input during a transient or start-up phase of said process.

The invention also proposes an apparatus for the production of a hydrogen-containing synthesis gas by the conversion of a hydrocarbon feedstock, said apparatus comprising :
- a fired equipment,
- a tank configured for storing liquid ammonia,
- a fuel supply system connecting said tank to the fired equipment to provide stored ammonia to said fired equipment, said fuel supply system comprising a fuel vaporizer configured for vaporizing liquid ammonia from the tank,
- an effluent gas discharge system arranged to discharge an effluent gas generated from said conversion and/or from said fired equipment,
- said fuel vaporizer being arranged within the effluent gas discharge system for transferring heat from the effluent gas to said liquid ammonia to vaporize said liquid ammonia.

In one embodiment, said fuel vaporizer is for example a tube and shell heat exchanger. In particular, said fuel vaporizer comprises a tube bundle configured for the circulation and cooling of said effluent gas and a shell configured for the circulation and evaporation of said liquid ammonia.

In one embodiment, the apparatus comprises an oxidant supply system arranged for providing an oxidant stream to the fired equipment, the oxidant supply system comprising an oxidant stream pre-heater arranged within the effluent gas discharge system for transferring heat from the effluent gas to said oxidant stream to pre-heat said oxidant stream. In particular, said fuel vaporizer is arranged downstream of or in parallel to said oxidant stream pre-heater within the effluent gas discharge system.

In one embodiment, the effluent gas discharge system is connected to the fired equipment for discharging from the fired equipment a flue gas generated by said fired equipment as said effluent gas.

In one embodiment, the fuel supply system comprises a liquid pump arranged for pumping said stored liquid ammonia to said fuel vaporizer.

In one embodiment, the effluent gas discharge system comprises an air cooler and/or a water cooler configured for cooling said effluent gas. In particular, the effluent gas discharge system comprises a bypass line arranged for the effluent gas to bypass said air cooler and/or said water cooler and a flow regulation device arranged for regulating an amount of effluent gas bypassing said air cooler and/or said water cooler. In one embodiment, the fuel vaporizer is fluidically arranged within the effluent gas discharge system in parallel with said air cooler and/or the water cooler or in series with said air cooler and/or the water cooler, in particular upstream of said air cooler and/or the water cooler.

In one embodiment, the apparatus comprises a conversion unit for performing said conversion of said hydrocarbon feedstock into said hydrogen-containing synthesis gas. In particular, said effluent gas discharge system is connected to said conversion unit for discharging from the conversion unit said synthesis gas.

In one embodiment, the conversion unit comprises a furnace to provide heat to said conversion, said fired equipment comprising said furnace and said effluent gas discharge system is connected to the furnace for discharging a flue gas from said furnace.

In one embodiment, said apparatus comprises a water gas shift reaction unit, arranged for performing a water-gas shift reaction with said synthesis gas, thereby obtaining a shift gas and said effluent gas discharge system is connected to said water gas shift reaction unit for discharging from the water gas shift reaction unit said shift gas.

In one embodiment, said apparatus comprises a hydrogen recovery unit arranged to produce hydrogen from said synthesis gas and/or a gas derived therefrom (for example said shift gas), thereby generating an off gas. In particular, said apparatus comprises a carbon dioxide removal unit arranged for removing carbon dioxide from said off gas, thereby obtaining a carbon dioxide depleted offgas and a carbon dioxide product.

In one embodiment, said apparatus comprises an off gas fueling conduit connecting said carbon dioxide removal unit and/or said hydrogen recovery unit with said fired equipment for supplying said off gas and/or said carbon dioxide depleted off gas as an additional fuel to said fired equipment.

In one embodiment, the fuel supply system comprises a fueling valve arranged for regulating a flow rate of the ammonia supplied to said fired equipment.

In one embodiment, said apparatus comprises an analyzer configured to determine a lower heating value (LHV) of said off gas and/or said carbon dioxide depleted off gas and a programmable logic controller configured for actuating said flow regulation device for regulating an amount of effluent gas bypassing said air cooler and/or said water cooler and configured for actuating said fueling valve to regulate a flow rate of ammonia supplied to said fired equipment, according to said determined lower heating value. In particular, said programmable logic controller is configured for increasing a flow rate of ammonia supplied to said fired equipment and for increasing an amount of effluent gas bypassing said air cooler and/or said water cooler if said determined lower heating value is below a predetermined value.

The invention also proposes a method of revamping of a plant for the production of a hydrogen-containing synthesis gas by the conversion of a hydrocarbon feedstock, said plant comprising a fired equipment and an effluent gas discharge system arranged to discharge an effluent gas generated from said conversion and/or said fired equipment, said method comprising :
- providing a tank configured for storing liquid ammonia,
- connecting said tank to said fired equipment with a fuel supply system comprising a fuel vaporizer configured for vaporizing liquid ammonia from the tank,
- arranging said fuel vaporizer within the effluent gas discharge system for cooling said effluent gas by vaporizing said liquid ammonia.

In one embodiment, the method comprises connecting said effluent gas discharge system with said fired equipment to discharge a flue gas generated by said fired equipment as said effluent gas.

In one embodiment, the method comprises arranging a liquid pump within said fuel supply system for pumping said stored liquid ammonia to said fuel vaporizer.

In one embodiment, the effluent gas discharge system comprises an air cooler and/or a water cooler for cooling said effluent gas and the method comprises arranging a bypass line for the effluent gas to bypass said air cooler and/or said water cooler and arranging a flow regulation device configured for regulating an amount of effluent gas bypassing said air cooler and/or said water cooler. In one embodiment, the method comprises fluidically arranging said fuel vaporizer within the effluent gas discharge system in parallel with the air cooler and/or the water cooler or in series with said air cooler and/or the water cooler, in particular upstream of said air cooler and/or the water cooler.
[Fig 1] is a schematic view of a first embodiment of the invention,
[Fig. 2] is a schematic view of a second embodiment of the invention.

In the following description, the word "connecting" in relation to a line, a conduit or a pipe shall be understood as fluidically connecting.

The term fired equipment denotes that the combustion is made with the formation of a flame.

The term trim fuel denotes a fuel that is not recycled from the process or from the apparatus, a fuel that advantageously comes from the battery limit, typically useful for a quick heat regulation or for the apparatus start-up.

The term heated fuel shall be understood as a fuel stream to which sensible heat and/or latent heat was transferred. In the case of the transferred latent heat, the fuel stream of ammonia is heated for vaporizing said fuel stream and the heated fuel stream of ammonia is at least partially in a gaseous form.

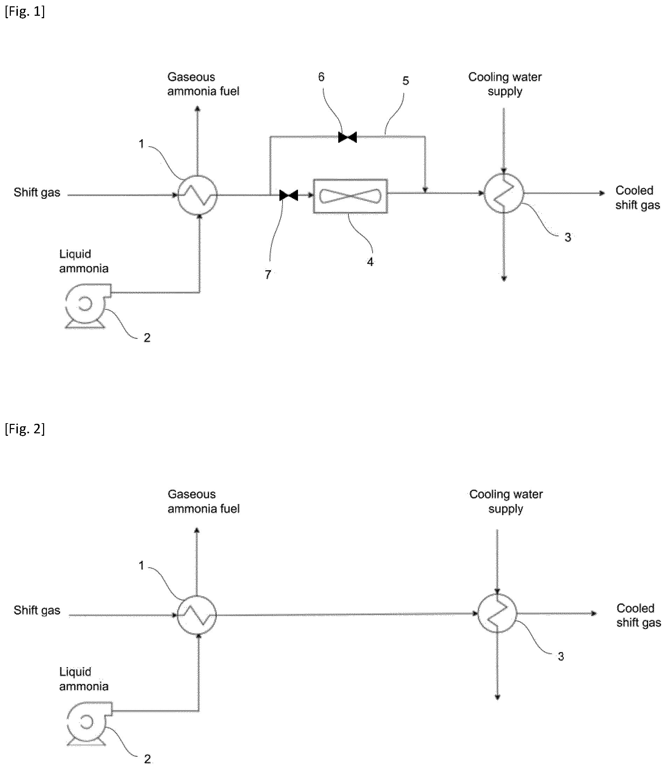

Figure 1 and 2 show a part of an apparatus or plant for the production of a hydrogen-containing synthesis gas by the conversion of a hydrocarbon feedstock. The apparatus comprises a conversion unit, comprising a reactor for converting the hydrocarbon feedstock into said hydrogen-containing synthesis gas and a furnace to provide heat to said reactor. To do so, a fuel stream of ammonia is provided as fuel to the furnace and a combustion of the fuel is performed in said furnace to generate said heat.

The apparatus comprises a water gas shift reaction unit for performing a water gas shift reaction with the synthesis gas obtained from the reactor. All these elements are not represented and a part of an effluent gas discharge system 8 downstream the water gas shift reaction unit is shown. The effluent gas discharge system 8 is connected to the water gas shift reaction unit to discharge a shift gas effluent from said water gas shift reaction unit. It is to be understood that the invention is not limited to this configuration and may encompass other arrangements in addition or as alternative. For example, the effluent gas discharge system 8 may be connected to the furnace to discharge a flue gas from the combustion as said effluent gas.

Said fuel stream of ammonia is provided to the furnace through a fuel supply system 9. The fuel supply system 9 comprises a pump 2 for pumping liquid ammonia stored in a tank (not represented). The fuel supply system 9 comprises a fuel vaporizer 1 to obtain said liquid fuel stream of ammonia in a gaseous form. The fuel supply system 9 advantageously comprises a fueling valve (not represented), for example arranged downstream of the fuel vaporizer 1, to regulate an amount of ammonia supplied as fuel to the furnace. The fueling valve may be actuated by a programmable logic controller (PLC) (not represented) for said regulation.

A non-represented oxidant supply system provides combustion air to perform said combustion. The combustion air is advantageously pre-heated by recovering heat from the shift gas. The shift gas from which heat was recovered still carries heat, but of a lower value due to a lower temperature level.

The fuel vaporizer 1 is arranged on said effluent gas discharge system 8, thus the fuel stream of ammonia can be vaporized by cooling the shift gas. The inventors have found that the low value heat of the shift gas can be used to vaporize the fuel stream of ammonia. This is particularly advantageous for the revamping of a plant while switching the fuel from a traditional hydrocarbon fuel to a carbon free fuel stream of ammonia, usually available in a liquid form. The fuel vaporizer 1 is acting as a utility cooler as it allows to cool the effluent gas discharge system 8 and the shift gas flowing in it.

In the embodiment of figure 1, the effluent gas discharge system 8 comprises both an air cooler 4 and a water cooler 3 to further cool the shift gas to a suitable temperature. The effluent gas discharge system 8 is provided with a by-pass line for bypassing at least partially said air cooler 4, as some shift gas cooling duty is already provided from the fuel vaporizer 1. A flow regulation device comprises a by-pass valve 6 arranged on the by-pass line and a regulation valve 7 arranged to restrict the amount of shift gas flowing through said air cooler 4. The flow regulation device may be connected to the PLC for controlling an amount of shift gas by-passing the air cooler 4.

In case the effluent gas discharge system 8 is also connected to the furnace to discharge a flue gas from the combustion as said effluent gas, less additional cooling duty will be needed to cool the flue gas to an acceptable temperature prior to discharging the flue gas through a stack, as cooling duty is already provided from the fuel vaporizer 1.

Hydrogen may be recovered from said cooled shift gas. A hydrogen recovery unit (not represented) produces a hydrogen product at high purity and an off gas. Said recovery of hydrogen may be performed by pressure swing adsorption. Said off gas may also be generated from the purge of an ammonia or methanol synthesis loop (ie. a gas derived from said synthesis gas). A carbon dioxide removal unit (not represented) may be configured for removing carbon dioxide from the off gas, thereby obtaining a carbon dioxide product that may be captured. The obtained carbon dioxide depleted off gas is advantageously supplied as a low carbon additional fuel to the furnace. To that purpose, an off gas fueling conduit connects the carbon dioxide removal unit with the furnace. A gas derived from said hydrogen-containing synthesis gas may also comprise said shift gas.

The lower heating value (LHV) of the carbon dioxide depleted off gas may be determined through an analyzer connected to the PLC and said programmable logic controller may regulate an amount of ammonia supplied as fuel to the furnace. If for example the LHV decreases, more ammonia is supplied as fuel to compensate for the loss of heating through the off gas. As more ammonia is vaporized while cooling the shift gas, the cooling duty from the air cooler 4 may be reduced. To do so, the PLC increases an amount of shift gas by-passing the air cooler 4.

The embodiment of figure 2 differs in that the effluent gas discharge system 8 comprises no air cooler 4 and only a water cooler 3. Again, omitting the air cooler 4 is allowed thanks to the fuel vaporizer 1 providing some cooling duty for cooling the shift gas.

## Claims

1. Process comprising the production of a hydrogen-containing synthesis gas by the conversion of a hydrocarbon feedstock, said process comprising :
- providing a fuel stream of ammonia,
- transferring heat from an effluent gas to the provided fuel stream of ammonia by heat exchange between the provided fuel stream of ammonia and said effluent gas, thereby obtaining a heated fuel,
- combustion of said heated fuel in a fired equipment to provide a heat input to the process, thereby generating a flue gas,
- said effluent gas comprising said hydrogen-containing synthesis gas and/or a gas derived therefrom and/or said flue gas.

2. Process according to the previous claim, wherein said heat exchange between the provided fuel stream of ammonia and said effluent gas is performed in a heat exchanger, in particular a tube and shell heat exchanger, in which the provided fuel stream of ammonia and the effluent gas are flowing.

3. Process according to claim 1 or claim 2, comprising performing said combustion by providing an oxidant stream, the process comprising transferring heat from the effluent gas to said oxidant stream, wherein transferring heat from the effluent gas to the provided fuel stream of ammonia comprises transferring heat from the effluent gas to the provided fuel stream of ammonia by heat exchange between the provided fuel stream of ammonia and said effluent gas downstream of transferring heat from the effluent gas to said oxidant stream or in parallel to transferring heat from the effluent gas to said oxidant stream.

4. Process according to one of the preceding claims, wherein transferring heat from an effluent gas to the provided fuel stream of ammonia comprises vaporizing said fuel stream of ammonia provided in a liquid form, thereby obtaining a vaporized fuel.

5. Process according to one of the preceding claims, wherein said conversion comprises performing an endothermic conversion of the hydrocarbon feedstock into said hydrogen-containing synthesis gas and said heat input comprises combusting said heated fuel to provide heat to said endothermic conversion, thereby generating said flue gas.

6. Process according to one of the preceding claims, comprising a cooling step comprising cooling at least part of the effluent gas by heat exchange with a cooling air supply and/or a cooling water supply, the process comprising diverting at least a part of the effluent gas to bypass said cooling step.

7. Process according to one of the preceding claims, wherein the synthesis gas comprises hydrogen and nitrogen and said synthesis gas is catalytically reacted in a synthesis loop to produce ammonia.

8. Process according to one of the preceding claims, comprising recovering hydrogen from the synthesis gas and/or from a gas derived therefrom, thereby producing a hydrogen product and generating an off gas.

9. Process according to the previous claim, wherein at least one additional fuel is provided and combusted to provide a further heat input to the process, the at least one additional fuel comprising at least part of said off gas and/or at least part of a gas derived from said off gas.

10. Process according to the previous claim, comprising determining a lower heating value of said off gas and/or gas derived from said off gas provided as additional fuel and regulating an amount of fuel stream of ammonia provided according to said determined lower heating value.

11. Process according to the previous claim and claim 6, wherein regulating an amount of fuel stream of ammonia provided according to said determined lower heating value comprises increasing said amount of fuel stream of ammonia provided and increasing an amount of effluent gas diverted to bypass said cooling step, if said determined lower heating value is below a predetermined value.

12. Apparatus for the production of a hydrogen-containing synthesis gas by the conversion of a hydrocarbon feedstock, said apparatus comprising :
- a fired equipment,
- a tank configured for storing liquid ammonia,
- a fuel supply system (9) connecting said tank to the fired equipment to provide stored ammonia to said fired equipment, said fuel supply system (9) comprising a fuel vaporizer (1) configured for vaporizing liquid ammonia from the tank,
- an effluent gas discharge system (8) arranged to discharge an effluent gas generated from said conversion and/or from said fired equipment,
- said fuel vaporizer (1) being arranged within the effluent gas discharge system (8) for transferring heat from the effluent gas to said liquid ammonia to vaporize said liquid ammonia.

13. Apparatus according to the previous claim, comprising an oxidant supply system arranged for providing an oxidant stream to the fired equipment, the oxidant supply system comprising an oxidant stream pre-heater arranged within the effluent gas discharge system (8) for transferring heat from the effluent gas to said oxidant stream to pre-heat said oxidant stream, said fuel vaporizer (1) being arranged downstream of or in parallel to said oxidant stream pre-heater within the effluent gas discharge system (8).

14. Apparatus according to one of claim 12 and 13, wherein the effluent gas discharge system (8) comprises :
- an air cooler (4) and/or a water cooler (3) configured for cooling said effluent gas,
- a bypass line (5) arranged for the effluent gas to bypass said air cooler (4) and/or said water cooler (3)
- a flow regulation device arranged for regulating an amount of effluent gas bypassing said air cooler (4) and/or said water cooler (3).

15. Method of revamping of a plant for the production of a hydrogen-containing synthesis gas by the conversion of a hydrocarbon feedstock, said plant comprising a fired equipment and an effluent gas discharge system (8) arranged to discharge an effluent gas generated from said conversion and/or said fired equipment, said method comprising :
- providing a tank configured for storing liquid ammonia,
- connecting said tank to said fired equipment with a fuel supply system (9) comprising a fuel vaporizer (1) configured for vaporizing liquid ammonia from the tank,
- arranging said fuel vaporizer (1) within the effluent gas discharge system (8) for cooling said effluent gas by vaporizing said liquid ammonia.
